Europäisches Patentamt

European Patent Office

Office européen des brevets

(11) Publication number: **0 384 442**
**A2**

## EUROPEAN PATENT APPLICATION

(21) Application number: **90103366.2**

(22) Date of filing: **21.02.90**

(51) Int. Cl.⁵: **G09G 5/06**

(30) Priority: **22.02.89 JP 44410/89**

(43) Date of publication of application:
**29.08.90 Bulletin 90/35**

(84) Designated Contracting States:
**DE GB**

(71) Applicant: **SHARP KABUSHIKI KAISHA**
**22-22 Nagaike-cho Abeno-ku**
**Osaka 545(JP)**

(72) Inventor: **Omori, Takuro**
**6-10-9 Okidome, Ikaruga-cho, Ikoma-gun**
**Nara-ken(JP)**

(74) Representative: **TER MEER - MÜLLER -**
**STEINMEISTER & PARTNER**
**Mauerkircherstrasse 45**
**D-8000 München 80(DE)**

(54) **Display control apparatus for reproducing color image on crt display device and matrix type display device.**

㊼ A display control apparatus for displaying a color image on a cathode ray tube (13) and a matrix type display device (14), including an image data generating unit (15) for generating digital image data corresponding to a pixel of a color image to be displayed, a luminance data generating unit (16) connected to the image data generating unit for generating, from the digital image data, digital luminance data corresponding to luminances of the pixel for three primary colors (R, G, B), a digital-to-analog conversion unit connected to the luminance data generating unit (16) for converting the digital luminance data into analog luminance signals and outputting the analog luminance signals to the cathode ray tube (13), and a gradation data generating unit (17) connected to the luminance data generating unit (16) for converting tha digital luminance data into digital gradation data representing gradation levels of the pixel for the three primary colors and outputting the digital gradation data to the matrix type display device (14).

*Fig. 1*

# DISPLAY CONTROL APPARATUS FOR REPRODUCING COLOR IMAGE ON CRT DISPLAY DEVICE AND MATRIX TYPE DISPLAY DEVICE

## BACKGROUND OF THE INVENTION

### 1. Field of the Invention

The present invention relates to a display control apparatus capable of simultaneously reproducing a color image on a CRT display device and a matrix type display device such as a liquid crystal display device.

### 2. Discription of the Related Art

Hitherto, there has been a known apparatus for reproducing a color image by the following steps of: generating digital image data corresponding to the color image to be reproduced by an image data generating circuit thereof, generating analog signals representing the luminance of each of R (red), G (green) and B (blue) components from the digital image data by using a color palette, and supplying the generated analog signals to a CRT display device.

Another apparatus for displaying a color image on both a CRT display device and a matrix type display device such as a liquid crystal display device has been known. In the apparatus of this type, the image data generating circuit thereof is designed to generate both digital image data adapted to the CRT display device and other digital image data adapted to the matrix type display device, and the generated two different digital image data are distributed to the color palette or the liquid crystal display device by a selector provided therein.

In the above-described apparatuses, it is possible to change the color tone of the image displayed on the CRT display device by rewriting the data in a memory of the color palette for storing correspondences between color image data and luminance data of R, G and B. But the color tone of the image displayed on the liquid crystal display device is left unchanged. Therefore, if the memory of the color palette is programmable, there is a problem that the color tone of the image displayed on the CRT display device and that displayed on the matrix type displaye may be completely different from each other. In a case where it is not required to display any image on the liquid crystal display device, and therefore, the liquid crystal display device is omitted from the apparatus, the gradation data generating function, the interface function and the like which have been provided in the image data generating circuit for the purpose of generating data adapted to the liquid crystal display device are rendered futile. Furthermore, it is disadvantageous in terms of the overall cost since the image data generating device is obliged to be changed when the gradation process is changed due to the development of the liquid crystal device.

## SUMMARY OF THE INVENTION

An object of the present invention is to provide a display control apparatus capable of displaying an image on a CRT display device and a matrix type display device in the same tone of color even if the data in the memory of the color palette has been rewritten.

The object of the invention can be achieved by a display control apparatus for displaying a color image on a cathode ray tube and a matrix type display device, comprising image data generating means for generating digital image data corresponding to a pixel of a color image to be displayed, luminance data generating means connected to said image data generating means for generating, from said digital image data, digital luminance data corresponding to luminances of said pixel for three primary colors, digital-to-analog conversion means connected to said luminance data generating means for converting said digital luminance data into analog luminance signals and outputting said analog luminance signals to said cathode ray tube, and gradation data generating means connected to said luminance data generating means for converting said digital luminance data into digital gradation data representing gradation levels of said pixel for the three primary colors and outputting said digital gradation data to said matrix type display device.

According to the present invention, the luminance data, which is generated by the luminance data generating means in accordance with the digital image data received from the image data generating means, serves as an image data for both the CRT display device and the matrix type display device. Therefore, the tone of the color image reproduced on the CRT display device and that reproduced on the matrix type display device are the same. Furthermore, since the gradation data, timing signals and the like adapted to the matrix type display device are generated by the gradation data generating means, not by the image data generating means, the structure of the image data generating means can be simplified. Furthermore, it is possible to cope with the modification of gradation process of the matrix type display device by changing only the gradation data generating means.

Further objects and advantages of the present invention will be apparent from the following description, reference being had to the accompanying drawings wherein a preferred embodiment of the present invention is clearly shown.

## BRIEF DESCRIPTION OF THE DRAWINGS

Fig. 1 is a block diagram of an embodiment of a display control apparatus according to the present invention;

Fig. 2 is a view for explaining the structure of a screen of a CRT display device and a matrix type liquid crystal display device;

Fig. 3 is a block diagram which illustrates the structure of a color palette of the display control apparatus;

Fig. 4 is a partially enlarged view which illustrates the arrangement of pixels on the screen of the matrix type liquid crystal display device;

Fig. 5 is a block diagram which illustrates the structures of a gradation data generating circuit and an interface circuit; and

Figs. 6 and 7 are time tables for explaining the operation of the display control apparatus.

## DESCRIPTION OF THE PREFERRED EMBODIMENT

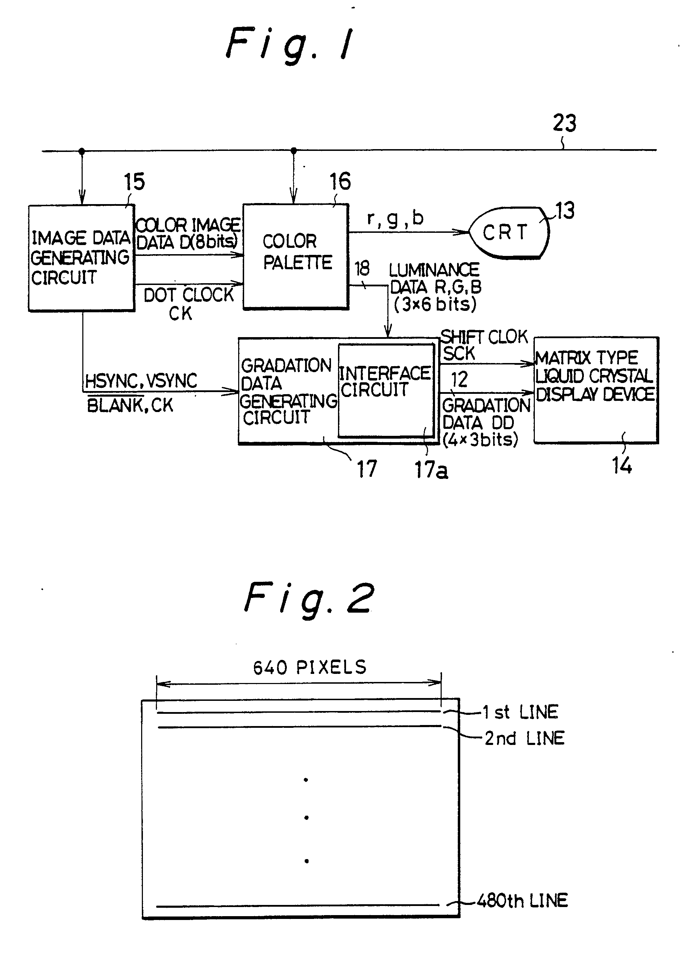

In Fig. 1, both a CRT display device 13 and a matrix type liquid crystal display device 14 serve as a dislay device for reproducing a color image. As schematically illustrated in Fig. 2, each of the screens of the above-described devices 13 and 14 has 480 lines arranged vertically therein, each of the 480 lines having 640 pixels arranged horizontally. An image data generating circuit 15 supplies the color palette 16 with an 8-bit color image data D, which is commonly used for both the CRT display device 13 and the matrix type liquid crystal display device 14, and with a dot clock CK, one period of which corresponds to one pixel of the color image on the screen of the CRT display device 13 or the matrix type liquid crystal display device 14. The color palette 16 comprises luminance data memory 8 for storing data of three primary colors separately.

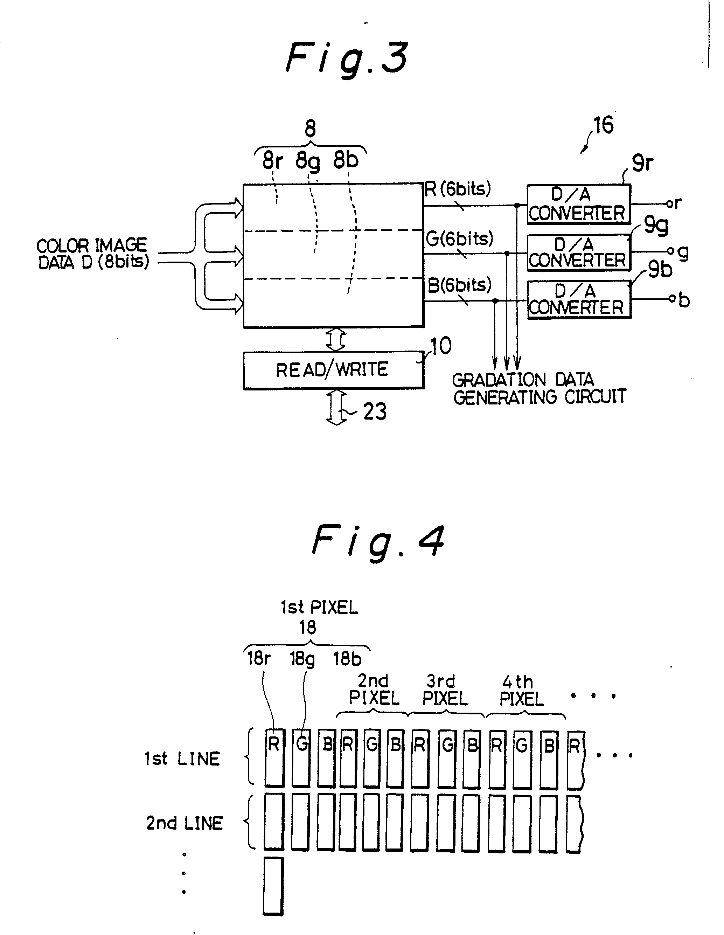

Fig. 3 is a block diagram which illustrates the structure of the color palette 16 in more detail.

The color palette 16 is provided with the luminance data memory 8 having three areas 8r, 8g and 8b which correspond to the three primary colors, three digital-to-analog converters (to be called "D/A converters" hereinafter) 9r, 9g and 9b which correspond to the areas 8r, 8g and 8b, and a read write circuit 10 for writing and reading data to and from the luminance data memory 8. The memory 8 stores $2^8$ words each of which is formed by 6 bits and represents luminance of one of the three primary colors. The color palette 16 receives the 8-bit color image data D from the image data generating circuit 15 as an addressing data. The color palette 16 reads 6-bits digital luminance data R, G and B from each of the areas 8r to 8b corresponding to the color image data D, and converts the read luminance data R, G and B into analog luminance data r, g and b by the D/A converters 9r to 9b. The analog luminance data r, g and b are supplied to the CRT display device 13 from the color palette 16. Since the 8-bit data D is delivered from the image data generating circuit 15 to the color palette 16, the luminance data memory 8 can be addressed in $2^8$ ( = 256) different ways so that the image can be displayed on the screen in 256 kinds of colors. The image can be displayed in a maximum of $2^6 \times 2^6 \times 2^6 = 2^{18}$ colors by rewriting data in the luminance data memory 8. The 6-bit luminance data R, G and B are also supplied to a gradation data generating circuit 17 from the color palette 16.

The gradation data generating circuit 17 has a gradation function for converting the received luminance data R, G and B into gradation data which is adapted to the gradation process of the matrix type liquid crystal display device 14, and an interface function for outputting the above gradation data to the matrix type liquid crystal display device 14 at proper timing adapted to the matrix type liquid crystal display device 14. The interface function is performed by an interface circuit 17a provided in the gradation data generating circuit 17.

In this embodiment, a frame thinning method is employed for gradating the image displayed on the screen of the matrix type liquid crystal display device 14. The frame thinning method is a method for expressing an apparent intermediate tone by causing pixels on the screen to light in a certain number of frames and causing the same pixels to stop lighting in other frames during a period formed by a predetermined number of frames in accordance with the level of the gradation of a region formed by a predetermined number of pixels, for example, 2 pixels x 2 pixel. The term "frame" means a period in which data, corresponding to all the pixels on one screen shown in Fig. 2, is scanned.

Fig. 4 is a partially enlarged view which illustrates the arrangement of the pixels on the screen of the matrix type liquid crystal display device 14. As shown in Fig. 4, each pixel 18 is constituted by three dots 18r, 18g and 18b disposed in the direction of the line (in the horizontal direction of the screen), the dots 18r, 18g, and 18b forming units for generating the three primary colors red, green and blue respectively.

As described above, since the frame thinning method is employed, and each pixel 18 in the matrix type liquid crystal display device 14 is constituted by three dots 18r to 18b, the gradation data delivered from the gradation data generating circuit 17 is such that each pixel 18 is reproduced by 3 bits. The interface circuit 17a provided in the gradation data generating circuit 17 has a function of converting the gradation data for 4 pixels of 12 bits (4 x 3 bits) in total into a 12-bit parallel signal, and supplying this 12-bit parallel signal to the matrix type liquid crystal display device 14.

Referring to Fig. 1, the image data generating circuit 15 and the color palette 16 are connected to an external CPU (not shown) via a system bus 23, and a color image is reproduced on the CRT display device 13 and the matrix type liquid crystal display device 14 in response to a command issued from the CPU.

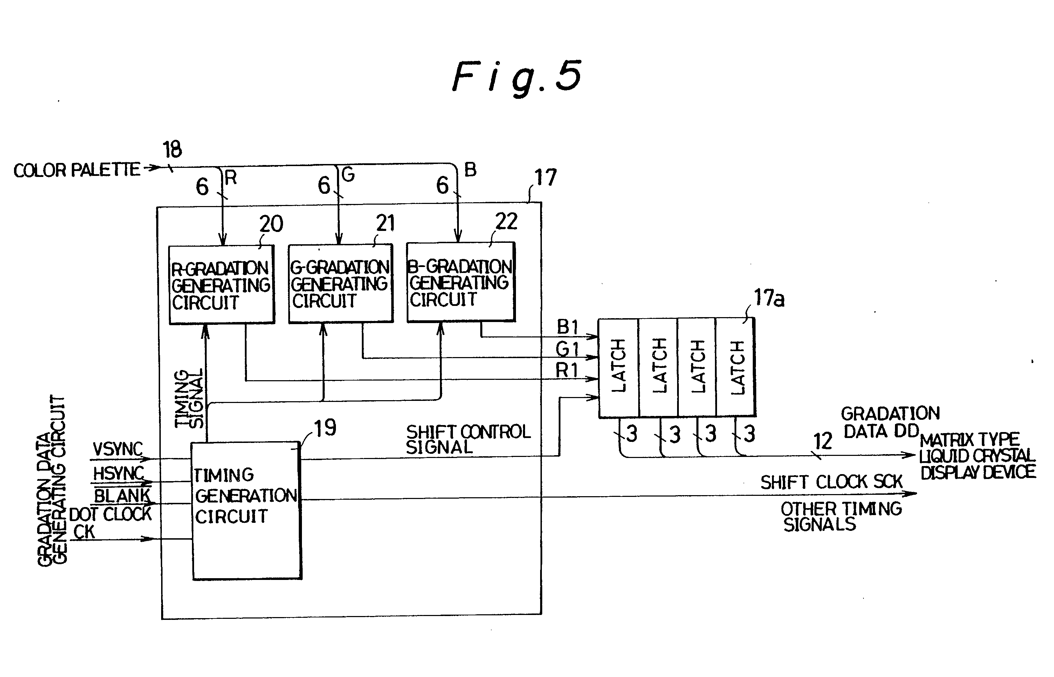

Fig. 5 illustrates the detailed structure of the gradation data generating circuit 17 and the interface circuit 17a. As shown in Fig. 5, the gradation data generating circuit 17 comprises a timing generating circuit 19, an R-gradation generating circuit 20, a G-gradation generating circuit 21 and B-gradation generating circuit 22. The timing generating circuit 19 receives, from the image data generating circuit 15, a horizontal synchronizing signal HSYNC, a vertical synchronizing signal VSYNC, a blank signal $\overline{BLANK}$, and a dot clock CK, supplies a timing signal to the respective gradation generating circuits 20, 21 and 22, and supplies a shift control signal to the interface circuit 17a. The timing generating circuit 19 also supplies other timing signals such as a shift clock SCK to the matrix type liquid crystal display device 14.

The respective gradation generating circuits 20, 21 and 22 receive 6-bit luminance data R, G and B from the color palette 16, and supply 1-bit data R1, G1 and B1 for designating lighting-on or lighting-off of the same pixel to the interface circuit 17a. The interface circuit 17a latches each four data R1, G1 and B1 and supplies the data for 4 pixels (4 x 3 = 12 bits) to the matrix type liquid crystal display device 14 at a time. Therefore, the shift clock SCK has a frequency which is a quarter of that of the dot clock CK.

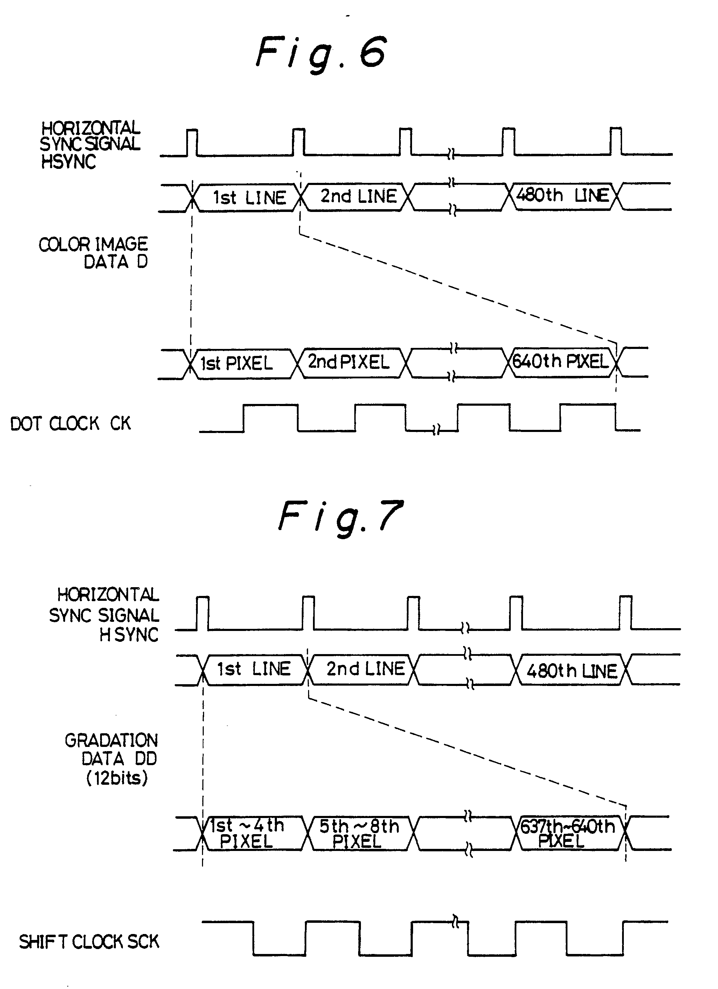

Fig. 6 is a time table showing data-transference operation from the image data generating circuit 15 to the color palette 16. Fig. 7 is another timing table showing data-transference operation from the gradation data generating circuit 17 to the matrix type liquid crystal display device 14.

The operation of the above-described display control apparatus will be described with reference to Figs. 6 and 7.

As shown in Fig. 6, the 8-bit color image data D outputted from the image data generating circuit 15 in synchronization with the dot clock CDK outputted from the same image data generating circuit 15, is supplied to the color palette 16. That is , as shown in Fig. 4, the data for 640 pixels on one line in the screen shown in Fig. 2 are outputted successively during one period of the horizontal synchronizing signal HSYNC. And in synchronization with the horizontal synchronization signal HSYNC, the color image data corresponding to the pixels on each line are successively outputted from the first line to 480th line. In the color palette 16, which receives the 8-bit color image data D as the addressing data, the luminance data R, G and B for the three primary colors corresponding to the color image data D are read from the luminance data memory 8. The read luminance data R, G and B are respectively converted into analog data by the D/A converts 9r, 9g and 9b, and supplied to the CRT display device 13. The CRT display device 13 reproduces a color image which corresponds to the supplied analog data.

On the other hand, the luminance data R, G and B, each having 6 bits per pixel read from the luminance data memory 8, are supplied to the gradation data generating circuit 17. In the gradation data generating circuit 17, each of the luminance data R, G and B is converted into 1-bit gradation.data R1, G1 and B1 respectively by the above-described frame thinning method. And a gradation data DD. for 4 pixels of 12 bits (4 x 3 bits = 12 bits) is sent out from the gradation data generating circuit 17 to the matrix type liquid crystal display device 14 at a time. That is, the gradation data for 4 pixels is temporally stored in the interface circuit 17a, and then it is sent out in synchronization with the shift clock SCK as shown in Fig. 7. The gradation data DD is latched at the fall of the shift clock SCK, and is fetched by the matrix type liquid crystal display device 14. Thus, the data for 640 pixels on one line in the screen shown in Fig. 2 are outputted successively during one period of the horizontal synchronizing signal HSYNC. And in synchronization with the horizontal synchronizing signal HSYNC, gradation data corresponding to the pixels on each line are successively outputted from the first line to 480th line. Thus, the matrix type liquid crystal display device 14 reproduces the color image in accordance with the gradation data DD supplied from the gradation data generating circuit 17. The colors of this reproduced image are the same as the colors of the image reproduced by the CRT display device 13.

Although the matrix type liquid crystal display device 14 is employed as a matrix type display in this embodiment, other device, fox example an EL (Electro luminescence) display device, may be employed.

Many widely different embodiments of the present invention may be constructed without departing from the spirit and scope of the present invention. It should be understood that the present invention is not limited to the specific embodiment described in this specification, except as defined in the appended claims.

## Claims

1. A display control apparatus for displaying a color image on a cathode ray tube (13) and a matrix type display device (14), comprising:
image data generating means (15) for generating digital image data corresponding to a pixel of a color image to be displayed;
luminance data generating means (16) connected to said image data generating means for generating, from said digital image data, digital luminance data corresponding to luminances of said pixel for three primary colors(R, G, B);
digital-to-analog conversion means (9r, 9g, 9b) connected to said luminance data generating means for converting said digital luminance data into analog luminance signals and outputting said analog luminance signals to said cathode ray tube; and
gradation data generating means (17) connected to said luminance data generating means for converting said digital luminance data into digital gradation data representing gradation levels of said pixel for the three primary colors and outputting said digital gradation data to said matrix type dislay device.

2. An apparatus according to Claim 1, wherein said matrix type display device (14) is a liquid crystal display device.

3. An apparatus according to Claim 1, wherein said luminance data generating means (16) has a memory (8) for storing luminance data for each of the three primary colors, said memory being adapted to output corresponding digital luminance data for the three primary colors when it is addressed by said digital image data.

4. An apparatus according to Claim 1, wherein said matrix type display device (14) is adapted to express an intermediate tone by a frame thinning method, and said digital gradation data comprises three 1-bit digital signals for designating lighting and non-lighting of a corresponding pixel for the three primary colors.

5. An apparatus according to Claim 1, wherein said gradation data generating means (17) has a latch circuit (17a) for storing gradation data for four pixels, and is adapted to supply gradation data for four successive pixels to said matrix type display device at a time.

6. An apparatus according to Claim 1, wherein said digital image data is formed by a parallel eight-bit signal and said digital luminance data is formed by three parallel six-bit signals.

# Fig. 1

23

15

IMAGE DATA
GENERATING
CIRCUIT

COLOR IMAGE
DATA D(8bits)

16

COLOR
PALETTE

r, g, b → CRT 13

DOT CLOCK
CK

18

LUMINANCE
DATA R, G, B
(3×6 bits)

HSYNC, VSYNC
BLANK, CK

GRADATION
DATA
GENERATING
CIRCUIT

INTERFACE
CIRCUIT

SHIFT CLOK
SCK

12

GRADATION
DATA DD
(4×3bits)

MATRIX TYPE
LIQUID CRYSTAL
DISPLAY DEVICE

17        17a                                          14

# Fig. 2

640 PIXELS

1 st LINE

2nd LINE

·
·
·
·

480th LINE

# Fig.3

COLOR IMAGE
DATA D (8bits)

8
8r  8g  8b

R (6bits)
G (6bits)
B (6bits)

16
9r
D/A CONVERTER — r
9g
D/A CONVERTER — g
9b
D/A CONVERTER — b

READ/WRITE — 10

23

GRADATION DATA
GENERATING CIRCUIT

# Fig.4

1st PIXEL
18
18r  18g  18b

2nd
PIXEL
3rd
PIXEL
4th
PIXEL
. . .

1st LINE  R G B R G B R G B R G B R . . .

2nd LINE

.
.
.

# Fig. 5

# Fig. 6

HORIZONTAL
SYNC SIGNAL
HSYNC

1st LINE 2nd LINE 480th LINE

COLOR IMAGE
DATA D

1st PIXEL 2nd PIXEL 640th PIXEL

DOT CLOCK CK

# Fig. 7

HORIZONTAL
SYNC SIGNAL
H SYNC

1st LINE 2nd LINE 480th LINE

GRADATION
DATA DD
(12bits)

1st ~ 4th
PIXEL 5th ~ 8th
PIXEL 637th~640th
PIXEL

SHIFT CLOCK SCK